Europäisches Patentamt

European Patent Office

Office européen des brevets

(19)

(11) Numéro de publication : **0 300 845 B1**

(12)

# FASCICULE DE BREVET EUROPEEN

(45) Date de publication du fascicule du brevet :
01.04.92 Bulletin 92/14

(51) Int. Cl.$^5$ : **F22B 37/20, F28F 9/00**

(21) Numéro de dépôt : **88401489.5**

(22) Date de dépôt : **15.06.88**

(54) **Dispositif de calage antivibratoire et composants d'une installation et en particulier barres antivibratoires de calage des tubes d'un générateur de vapeur.**

(30) Priorité : **17.07.87 FR 8710158**

(43) Date de publication de la demande :
**25.01.89 Bulletin 89/04**

(45) Mention de la délivrance du brevet :
**01.04.92 Bulletin 92/14**

(84) Etats contractants désignés :
**BE CH DE ES GB LI SE**

(56) Documents cités :
**GB-A- 2 174 484**

(73) Titulaire : **FRAMATOME**
**Tour Fiat 1, Place de la Coupole**
**F-92400 Courbevoie (FR)**

(72) Inventeur : **Malaval, Claude**
**115 bis Avenue du bois de Verrières**
**F-92161 Antony (FR)**

(74) Mandataire : **Polus, Camille et al**
**c/o Cabinet Lavoix 2, Place d'Estienne d'Orves**
**F-75441 Paris Cedex 09 (FR)**

EP 0 300 845 B1

Jouve, 18, rue Saint-Denis, 75001 PARIS

## Description

L'invention concerne un dispositif de calage antivibratoire de composants d'une installation disposés de façon à constituer des rangées successives et en particulier une barre antivibratoire de calage des tubes d'un générateur de vapeur d'un réacteur nucléaire à eau sous pression.

Les générateurs de vapeur des réacteurs nucléaires à eau sous pression comportent un faisceau constitué par un très grand nombre de tubes généralement plusieurs milliers de tubes, pliés en U, de façon à présenter deux branches droites et un cintre de forme semi-circulaire reliant les deux branches droites. Les extrémités des parties droites des tubes sont fixées dans une plaque tubulaire et constituent la partie inférieure du faisceau. Les parties cintrées juxtaposées des tubes constituent la partie supérieure ou chignon du faisceau tubulaire.

Les tubes du faisceau ne sont pas identiques entre eux, le rayon de courbure de la partie cintrée variant avec la position du tube dans le faisceau. De manière générale, les cintres situés à la partie centrale du faisceau ont un faible rayon de courbure et les cintres situés à la périphérie, un grand rayon de courbure.

Ces tubes sont disposés suivant des plans verticaux parallèles entre eux séparés par une distance sensiblement constante correspondant à la distance séparant deux rangées successives de trous sur la plaque tubulaire.

Les parties droites des tubes sont maintenues dans la direction transversale par des plaques entretoises percées d'ouvertures reproduisant sensiblement le réseau de trous traversant la plaque tubulaire. Les plaques entretoises sont fixées à leur périphérie sur une enveloppe cylindrique entourant le faisceau.

La partie supérieure des tubes du faisceau comportant des rangées successives de cintres séparées par une distance sensiblement constante comporte des éléments d'entretoisement et de calage disposés dans les espaces ménagés entre deux rangées successives de tubes.

Aussi bien les plaques entretoises assurant le maintien de la partie droite des tubes que les dispositifs de maintien des cintres dans le chignon doivent permettre un maintien efficace des tubes sans pour autant gêner la circulation de l'eau d'alimentation du générateur de vapeur au contact de la surface extérieure des tubes du faisceau. L'eau primaire sous pression de refroidissement du réacteur circule à l'intérieur des tubes du faisceau de générateur de vapeur et permet l'échauffement et la vaporisation de l'eau d'alimentation circulant au contact de la surface externe des tubes.

La circulation à grande vitesse de courants de fluide au contact des tubes du faisceau se traduit par des sollicitations pouvant conduire à la mise en vibration de ces tubes dans le générateur de vapeur en service. Il peut en résulter une usure ou un endommagement des tubes au cours d'une utilisation de longue durée du générateur de vapeur, en particulier au niveau des plaques entretoises.

On a proposé d'utiliser, pour assurer le maintien des cintres dans le chignon du faisceau, des dispositifs de calage constitués par des barres antivibratoires qui sont disposées dans les espaces entre les rangées de tubes pour en assurer le calage.

Ces barres antivibratoires doivent présenter une épaisseur inférieure à la largeur des espaces séparant deux rangées de tubes successives, pour qu'on puisse assurer leur introduction entre les rangées du chignon, sans difficulté, sans déplacer et sans détériorer les cintres entre lesquels on intercale les barres antivibratoires.

En outre, la prise en considération des tolérances de fabrication des tubes et des barres antivibratoires conduit à augmenter encore le jeu résiduel de montage des barres dans le chignon.

La présence de jeux relativement importants entre les barres et les tubes se traduit par des vibrations en service qui s'accompagnent de chocs et de frottements générateurs d'usure et de détérioration des tubes.

On a donc cherché à utiliser des barres antivibratoires plus efficaces pour effectuer le calage antivibratoire des tubes dans le chignon.

On a par exemple proposé d'utiliser des barres antivibratoires dilatables dans le sens de leur épaisseur et comportant une paire de tiges réglables reliées entre elles et qui peuvent être déplacées l'une par rapport à l'autre entre une première position dans laquelle la barre antivibratoire a une épaisseur inférieure à l'espace entre deux rangées successives de tubes et une seconde position dans laquelle la barre antivibratoire présente une épaisseur supérieure à celle qui correspond à la première position des tiges réglables.

Selon la demande de brevet Français 2.558.933, chaque paire de tiges réglables constituant une barre antivibratoire comprend des sections de tiges complémentaires ayant des zones de surface obliques placées face à face et qui forment des rampes longitudinales dont le déplacement relatif permet une dilation transversale de la barre.

De tels dispositifs sont d'une réalisation complexe et présentent une grande rigidité dans la direction transversale correspondant à la direction de la largeur des rangées de tubes, si bien qu'ils sont peu susceptibles de s'adapter à des différences de dimensions, de forme ou de positionnement des tubes dans les rangées.

En outre, avec de telles barres antivibratoires, il est très difficile de faire varier la force de serrage des tubes qui est définie une fois pour toutes par les rampes longitudinales usinées sur les tiges.

Enfin, la dilatation transversale de la barre est constante sur toute la rangée de tubes, si bien que dans le cas où les génératrices des tubes sur lesquels on effectue le serrage ne sont pas parfaitement alignées, le calage de certains tubes n'est pas réalisés de façon efficace.

On a également proposé de réaliser des barres antivibratoires, à partir d'éléments de calage allongées disposés dans un profilé creux et pouvant s'écarter l'un de l'autre, de manière qu'au moins un des éléments de calage vienne en appui sur une rangée de tubes. L'écartement des éléments de calage peut être réalisé automatiquement, lors de la mise en service du générateur de vapeur, grâce à des pièces en alliage à mémoire de forme en appui sur les pièces de calage. Un tel dispositif nécessite cependant l'utilisation de pièces dont l'élaboration et la mise en oeuvre sont relativement délicates et le système n'est pas réversible ce qui ne facilite pas leur enlèvement en cas de réparation.

Le but de l'invention est donc de proposer un dispositif de calage antivibratoire de composants d'une installation disposés de façon à constituer des rangées successives séparées par un espace de largeur sensiblement constante, destiné à être intercalé entre deux rangées successives et constitué par un profilé ayant une section creuse, dans lequel sont disposés au moins deux éléments de calage élastiques, l'un au moins des éléments étant monté fixe par rapport au profilé et un autre étant monté mobile par rapport au profilé dans la direction longitudinale du profilé et comportant des surfaces d'actionnement complémentaires et un moyen de déplacement longitudinal relatif, de manière à être déplacés l'un par rapport à l'autre, à la fois dans la direction longitudinale et dans la direction transversale correspondant à la direction de la largeur des rangées, l'un au moins des éléments de calage venant en appui sur les composants disposés suivant une rangée, le dispositif de calage d'une forme et d'un réalisation simples permettant d'absorber des différences de dimension et des anomalies de positionnement de composants disposés suivant une rangée.

Dans ce but, l'un des éléments de calage est constitué par une bande métallique élastique pliée de façon à constituer des créneaux transversaux disposés successivement dans la direction longitudinale, ayant des faces d'appui opposées dirigées les unes vers l'intérieur du support profilé, les autres vers l'extérieur et une bande plate comportant des ouvertures séparées par des parties intermédiaires de la bande plate dont les dimensions et la disposition suivant la longueur de la bande plate correspondent aux dimensions et à la disposition des surfaces d'appui intérieures de la bande pliée, le moyen de déplacement longitudinal étant associé à la bande plate pour son déplacement entre une position déverrouillée où les surfaces d'appui intérieures sont en coïncidence avec les ouvertures de la bande plate et une position de verrouillage où les surfaces d'appui intérieures sont en contact avec les parties intermédiaires de la bande plate entre les ouvertures.

Afin de bien faire comprendre l'invention, on va maintenant décrire, à titre d'exemples non limitatifs, plusieurs modes de réalisation d'un dispositif antivibratoire d'un générateur de vapeur de réacteur nucléaire à eau sous pression.

La figure 1 est une vue en élévation avec coupe partielle d'un générateur de vapeur comportant des barres antivibratoires suivant l'invention.

La figure 2 est une vue en perspective d'une partie d'une barre antivibratoire suivant l'invention et suivant un premier mode de réalisation.

La figure 3 est une vue en coupe longitudinale suivant 3-3 de la figure 2.

La figure 4 est une vue en coupe transversale suivant 4-4 de la figure 3.

La figure 5 est une vue en perspective éclatée d'une partie des éléments de calage de la barre antivibratoire représentée sur les figures 2, 3 et 4.

La figure 6 est une vue en perspective de l'extrémité d'un des éléments de calage et de son moyen de déplacement.

La figure 7 est une vue en perspective d'une partie d'une barre antivibratoire suivant l'invention et suivant une première variante de réalisation.

La figure 8 est une vue en coupe transversale de la barre antivibratoire représentée sur la figure 7.

La figure 9 est une vue en perspective des éléments de calage de la barre antivibratoire représentée sur les figures 7 et 8.

La figure 10 est une vue en perspective d'une barre antivibratoire selon l'invention et selon une seconde variante de réalisation.

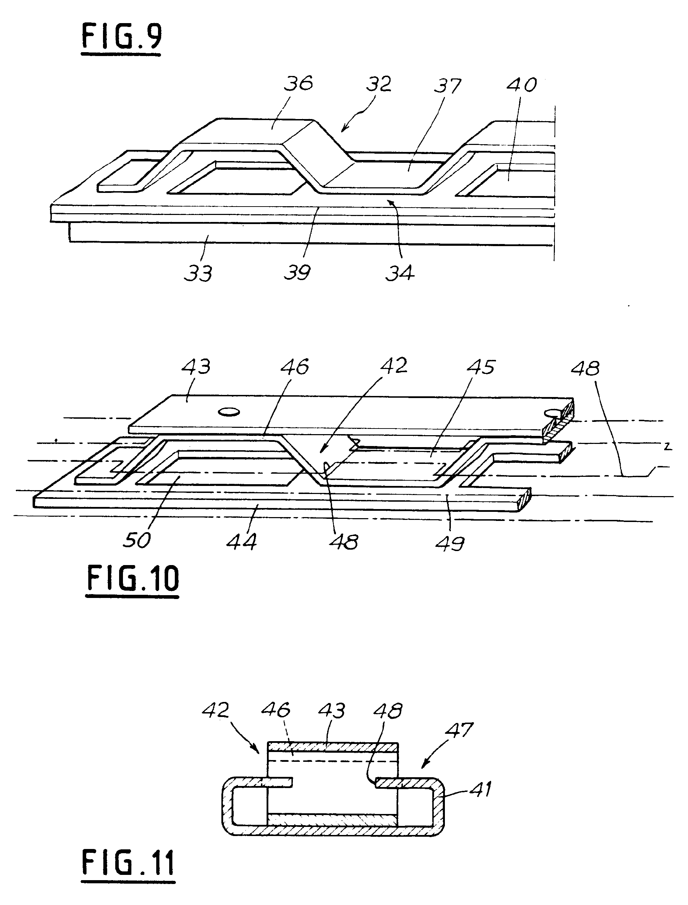

Le figure 11 est une vue en coupe transversale de la barre antivibratoire représentée sur la figure 10.

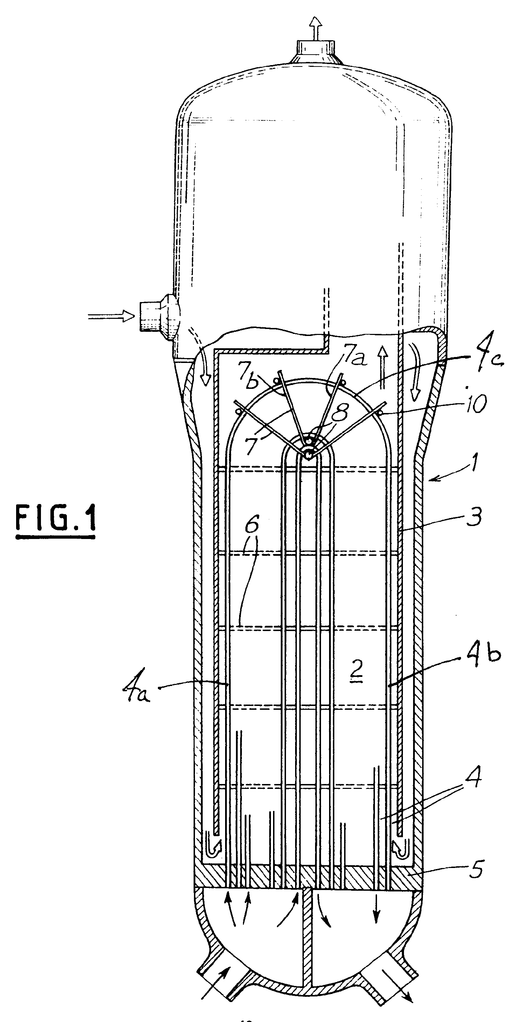

Sur la figure 1, on voit un générateur de vapeur comportant une enveloppe externe 1 dans laquelle est disposé un faisceau de tubes 2 à l'intérieur d'une envelppe de faisceau 3. Les tubes 4 du faisceau 2 ont une forme de U et traversent par leurs extrémités une plaque tubulaire 5 dans laquelle ils sont fixés.

Chacun des tubes du faisceau en U comporte deux branches verticales 4a et 4b et un cintre de forme semi-circulaire 4c. Les tubes 4 représentés sur la figure 1 ont leurs extrémités fixées dans des trous de la plaque tubulaire 5 disposés suivant une rangée rectiligne. Ces tubes 4, constituant une rangée du faisceau, ont leurs axes placés dans un même plan vertical qui est le plan de coupe de la figure 1. Les tubes 4 comportent des cintres dont le rayon est décroissant depuis la périphérie du faisceau jusqu'à la partie centrale.

Les branches droites 4a et 4b des tubes 4 sont maintenues contre les sollicitations transversales par des entretoises 6 réparties suivant la hauteur du faisceau.

Les cintres 4c des tubes constituant des rangées successives sont séparés par un espace d'une largeur relativement faible dans la direction perpendiculaire au plan de la figure 1, cette distance étant approximativement constante d'une rangée de tubes 4 à une autre.

Pour éviter la mise en vibrations des cintres 4c dans la direction perpendiculaire aux rangées, on intercale, dans chacun des espaces entre deux rangées, un jeu de barres antivibratoires 7 en forme de V constituées chacune de deux branches 7a et 7b reliées par une articulation 8. Les barres antivibratoires 7 sont maintenues dans la partie supérieure du faisceau appelée chignon par des anneaux de maintien 10.

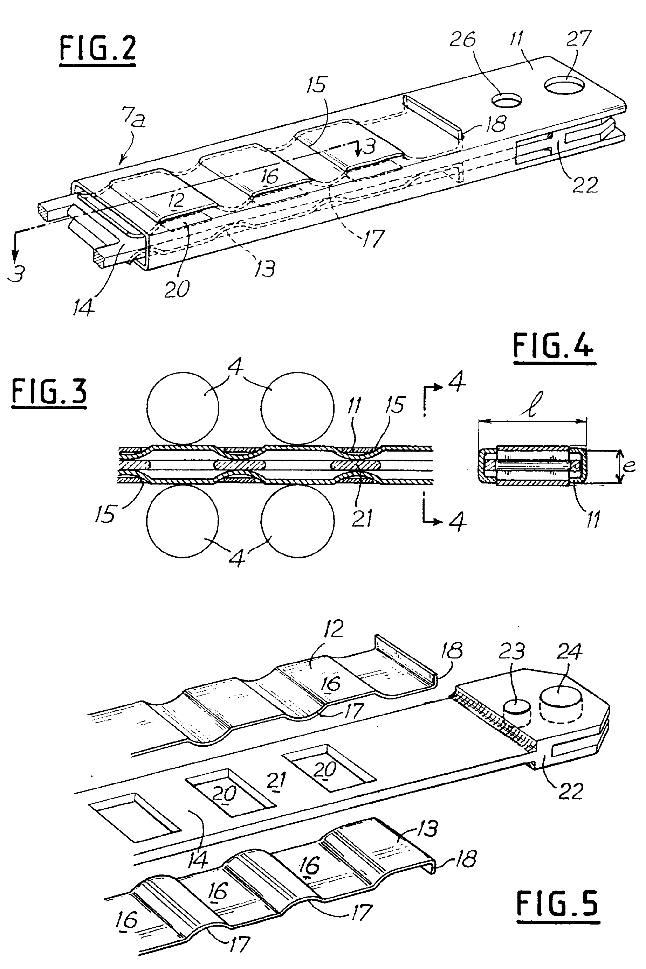

Sur la figure 2, on voit une partie d'une branche 7a d'une barre antivibratoire correspondant à son extrémité disposée au voisinage de la surface extérieure du chignon. Cette branche 7a comporte un support 11 et des éléments de calage 12, 13 et 14.

Comme il est visible sur la figure 4, le support 11 est constitué par un profilé ayant une section creuse, en forme de rectangle à angles arrondis. Cette section creuse rectangulaire est constituée par deux profilés en U assemblés le long de leurs bords latéraux longitudinaux. Le support 11 comporte sur ses faces plates supérieure et inférieure, une succession d'ouvertures 15 de forme rectangulaire et disposées, suivant la longueur du support 11, avec un espacement constant.

On voit sur les figures 3 et 5, que les éléments de calage 12 et 13 sont constitués chacun par une bande de tôle pliée pour constituer des créneaux successifs, suivant la longueur de la bande de tôle. Après pliage, chacune des tôles présentent des parties plates 16 séparées par des parties arrondies de forme sensiblement cylindrique 17. Les éléments 12 et 13 comportent de plus un rebord 18 plié à 90°, à leur extrémité.

L'élément de calage 14 est constitué par une bande plate présentant des ouvertures successives 20 régulièrement espacées et traversant la bande plate sur toute son épaisseur.

Comme il est visible sur les figures 2 et 3, la disposition et la dimension des ouvertures 15 du support profilé 11, des surfaces d'appui 16 des éléments 12 et 13 et des ouvertures 20 de l'élément 14 sont telles qu'on puisse réaliser un assemblage de la barre antivibratoire tel que représenté. En particulier, les ouvertures 15 ont des dimensions légèrement supérieures aux parties plates d'appui 16 des éléments 12 et 13, pour que ces parties plates d'appui puissent venir légèrement en saillie latéralement par rapport aux faces du support 11, dans leur position de verrouillage, comme il sera indiqué plus loin. Dans cette position, les parties 17 des éléments 12 et 13 sont en appui sur des parties intermédiaires 21 de l'élément 14 séparant les ouvertures 20.

L'élément 14 comporte une partie d'extrémité 22 constituée sous la forme d'une chape traversée par une ouverture circulaire 23 et portant un axe 24 fixé rigidement sur la chape 22.

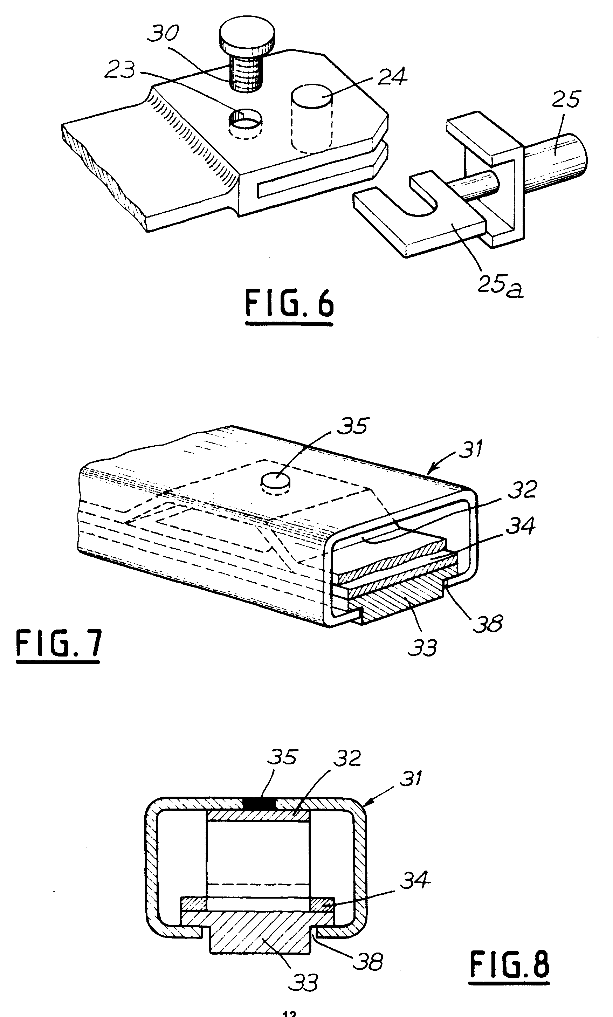

L'axe 24 solidaire de la chape 22 comporte une partie libre entre les deux branches de la chape qui est accessible pour la partie d'accrochage 25a d'un outil de traction 25 comme il est visible sur la figure 6.

La chape 22 de l'élément 14 est destinée à venir, lors du montage de la barre antivibratoire, dans la partie d'extrémité du support profilé 11. Dans cette partie d'extrémité, le support profilé 11 comporte deux ouvertures 26 et 27 espacées d'une certaine distance suivant la direction longitudinale de la barre antivibratoire.

Chacune des barres antivibratoires comporte deux branches 7a et 7b identiques et reliées à l'une de leurs extrémités par l'intermédiaire d'une pièce d'articulation 8, à la manière des branches d'un compas.

Les extrémités des branches 7a et 7b reliées entre elles par la pièce d'articulation 8 correspondent à l'extrémité de la barre antivibratoire située à l'intérieur du chignon. Les extrémités extérieures des barres antivibratoires 7 sont constituées par les extrémités des branches 7a et 7b recevant les chapes d'extrémité 22 des pièces 14 correspondantes.

Sur la figure 2, on a représenté l'extrémité extérieure de la branche 7a d'une barre antivibratoire.

Le montage et la mise en oeuvre d'une barre antivibratoire sont réalisés de la façon qui va être décrite ci-dessous.

Les éléments 12 et 13 constitués par des bandes pliées en créneaux sont introduits et fixés dans les supports 11 correspondants des deux branches 7a et 7b de la barre antivibratoire, de façon que les surfaces d'appui plates 16 soient dirigées vers l'extérieur du support 11 et engagées dans les ouvertures 15. Les éléments 12 et 13 comportent une languette relevée à 90° telle que la languette 18, à chacune de leurs extrémités, cette languette étant engagée, lors de l'assemblage, dans des fentes correspondante du support 11.

Les surfaces d'appui cylindriques 17 des éléments 12 et 13 sont dirigées vers l'intérieur et l'élément de calage 14 est introduit entre les éléments 12 et 13, de façon que les surfaces d'appui intérieures 17 soient chacune au niveau d'une ouverture 20 de la bande plate 14. L'ouverture 23 de la chape 22 se trouve alors en coïncidence avec l'ouverture 26 du support 11. Un pion de verrouillage 30, comme représenté sur la figure 6, peut être alors introduit dans les ouvertures en coïncidence 26 et 23, pour maintenir l'élément de calage 14 dans la position décrite ci-dessus qui correspond au déverrouillage de la barre antivibratoire. En effet, les deux éléments de calage 12 et 13 peuvent alors venir en contact par leur partie d'appui intérieure 17, les parties d'appui extérieures 16 étant alors en position rentrée à l'intérieur du support profilé 11. Les branches de la barre antivibratoire présentent une épaisseur correspondant à l'épaisseur e (figure 4) du support profilé 11. Cette épaisseur e est inférieure à la largeur de l'espace séparant deux rangées de tubes 4 entre lesquelles la barre antivibratoire est introduite.

Les barres antivibratoires selon l'invention sont donc introduites sans difficulté entre les rangées de tubes 4 constituant le chignon du générateur de vapeur. Les barres antivibratoires 7 sont introduites dans leur position repliée, les deux branches du compas étant rabattues l'une vers l'autre.

Les deux extrémités extérieures des branches 7a et 7b sont alors écartées l'une de l'autre de façon à venir dans leur position définitive au voisinage de la surface extérieure du chignon. Les extrémités des barres antivibratoires sont maintenues en position par les anneaux 10 représentés sur la figure 1.

Les extrémités des branches des barres antivibratoires sont alors saillantes à l'extérieur du chignon et accessibles pour un opérateur effectuant leur verrouillage.

Cette opération de verrouillage est effectuée en enlevant le pion de blocage 30 des ouvertures 26 et 23 et en introduisant la partie d'accrochage 25a du dispositif de traction 25 entre les branches de la chape 22, de façon à venir en prise avec l'axe de traction 24. Une traction est exercée sur l'extrémité de l'élément 14 par l'intermédiaire de l'axe 24, grâce au dispositif 25 pour amener cet élément de calage 14 dans sa position de verrouillage comme représentée sur les figures 2 et 3. Les surfaces d'appui intérieures 17 des éléments 12 et 13 sont alors en appui sur les parties intermédiaires 21 de la bande plate constituant l'élément 14. Dans cette position, l'ouverture 23 de la chape 22 est en coïncidence avec l'ouverture 27 du support profilé 11. Le pion de blocage 30 est alors introduit dans les ouvertures 27 et 23. Le même opération est effectuée pour les deux branches de la barre antivibratoire qui est alors bloquée dans sa position de verrouillage. Dans cette position, les deux éléments de calage 12 et 13 sont écartés l'un de l'autre et vers l'extérieur par les parties 21 de la bande plate 14.

La barre antivibratoire est en appui sur les tubes 4 constituant chacune des rangées entre lesquelles elle est intercalée, par l'intermédiaire des parties plates d'appui 16 des éléments 12 et 13. Ces parties 16 sont donc espacées d'une distance correspondant exactement au pas du réseau des tubes 4.

Dans le cas d'une différence entre les diamètres de deux tubes 4 successifs ou dans le cas d'un léger défaut de positionnement de ces tubes, l'élasticité des bandes pliées en créneaux 12 et 13 permet de rattraper aisément ces défauts locaux. En effet, dans ce cas, la partie correspondante de la bande 12 ou de la bande 13 pivote légèrement autour de la génératrice de contact entre la surface d'appui 17 et la partie 21 de la bande plate, pour accomoder le défaut.

Dans le cas de tubes de générateur de vapeur d'un diamètre voisin de 20 mm, la largeur de l'espace entre les rangées de tubes étant un peu supérieure à 10 mm, on a utilisé, pour réaliser les éléments 12 et 13, des bandes en acier inoxydable d'une épaisseur de 1 mm ou de 1,5 mm. L'élément 14 a été réalisé à partir d'une bande de 3 mm d'épaisseur. Les créneaux des éléments 12 et 13 ont une hauteur de l'ordre de 4 mm. L'épaisseur e du profilé 11 est de 10 mm. Le profilé 11 est également réalisé en acier inoxydable alors que l'élément plat 14 peut être réalisé en acier chromé, pour réduire l'usure des parties intermédiaires 21 au contact des parties d'appui intérieures 17 des éléments 12 et 13 en acier inoxydable qui sont également chromés.

La largeur l du profilé 11 (voir figure 4) est de l'ordre de 30 à 40 mm.

Les ouvertures 20 de l'élément 14 ont leur bord délimitant les zones intermédiaires 21, de forme arrondie, afin de faciliter l'engagement de ces parties intermédiaires 21 entre les faces d'appui intérieures 17 des éléments 12 et 13, au moment du verrouillage de la barre antivibratoire. L'angle d'attaque des parties 17 de forme cylindrique avec les parties intermédiaires 21 étant variable permet d'avoir l'effort maximum de serrage en fin de course sans augmenter l'effort de traction global sur la bande 14.

La barre antivibratoire telle que décrite peut permettre de rattraper un jeu ou une différence de diamètre entre des tubes voisins de l'ordre de 0,07 mm, le rattrapage étant assuré par une déformation élastique en flexion de l'élément 12 ou 13, avec une flèche de 0,07 mm. La contrainte maximale dans la bande pliée en créneaux correspondante est de l'ordre de 150 MPa. La force de serrage sur le tube 4 est alors de 110 N.

En utilisant une bande pliée en créneaux d'une épaisseur de 1 mm au lieu de 1,5 mm, pour une même contrainte de 150 MPa, la flèche est de 0,1 mm au lieu de 0,07 mm et la force de serrage du tube est de 50 N. Le dispositif présente donc une grande souplesse d'adaptation aux besoins du faisceau de tubes.

Le dispositif suivant l'invention dont la conception et la mise en oeuvre sont simples permet donc de réaliser un calage antivibratoire efficace et régulier et d'absorber de petites différences de diamètre et de petits défauts de positionnement des tubes dans le réseau du générateur de vapeur.

Le mode de réalisation des figures 2 à 6 nécessite cependant une mise en place relativement précise de la barre antivibratoire dans le chignon, chacune des parties plates successives 16 des éléments 12 et 13 devant venir en appui sur un tube 4 du générateur de vapeur avec une tolérance d'un demi pas en plus ou en moins.

Les variantes des figures 7 à 9 et 10 et 11 respectivement permettent de s'affranchir de cette exigence concernant la mise en place des barres antivibratoires.

Selon une première variante représentée sur les figures 7, 8 et 9, chacune des branches de la barre antivibratoire comporte un support profilé 31 dont la section creuse a la forme d'un rectangle ouvert sur l'un de ses grands côtés pour constituer une fente longitudinale 38 sur toute la longueur de la barre antivibratoire.

Comme il est visible sur les figures 7, 8 et 9, la branche de la barre antivibratoire comporte à l'intérieur du support profilé 31, un élément de calage 32 constitué par une bande métallique pliée en créneaux, une bande plate 34 comportant des ouvertures successives 40 dans la direction longitudinale et une plaque d'appui profilée 33 ayant une section en forme de T et en appui par sa face de plus grande section sur une des faces de la bande plate 34.

La bande 32 pliée en créneaux comporte des surfaces d'appui successives 36 dirigées vers l'extérieur et 37 dirigées vers l'intérieur de la barre antivibratoire. Les faces 36 sont en appui sur la surface intérieure du profilé 31 et fixées sur celles-ci par l'intermédiaire de points de soudure 35. Les surfaces plates 37 sont en appui sur la bande plate 34 sur sa face opposée à la plaque 33.

Sur la figure 9, le dispositif a été représenté dans sa position verrouillée, la bande plate 34 étant en contact avec la bande 32 pliée en créneaux, au niveau de ses surfaces d'appui plates 37, par l'intermédiaire de parties intermédiaires 39 intercalées entre les ouvertures 40.

Comme précédemment, la barre antivibratoire est mise en place dans le chignon du générateur de vapeur dans sa position déverrouillée, la bande plate 34 étant disposée de façon que les ouvertures 40 se trouvent chacune au niveau d'une face d'appui plate 37 de la bande 32. Le verrouillage est ensuite effectué par déplacement longitudinal de la bande plate 34 pour amener ses parties intermédiaires 39 en contact avec les surfaces d'appui 37.

Le calage des tubes 4 disposés suivant deux rangées entre lesquelles est introduite la barre 37 est effectué par l'intermédiaire de la surface extérieure du profilé 31 et de la petite face de la plaque 33. Ce dispositif permet d'éviter d'avoir à placer de façon très précise la barre antivibratoire, par rapport à la rangée de tubes 4. Cependant, ce dispositif ne permet pas d'absorber des différences de diamètre entre les tubes et les défauts de positionnement, aussi efficacement que le dispositif représenté sur les figures 2 à 6.

Sur les figures 10 et 11, on a représenté une seconde variante de réalisation d'une barre antivibratoire 47 suivant l'invention comportant un support profilé 41 dans lequel sont disposées une bande métallique pliée en créneaux 42 et une bande plate 44 présentant des ouvertures successives 50. La bande pliée en créneaux 42 comporte des surfaces plates d'appui extérieures 46 et des surfaces d'appui intérieures plates 45. Les surfaces d'appui intérieures plates 45 viennent en contact avec la bande plate 44. Le support 41 comporte des échancrures 48 permettant le passage de la partie extérieure de la bande 42 pliée en créneaux comportant les surfaces d'appui extérieures 46. La partie extérieure de la bande 42 pliée en créneaux est solidaire d'une plaque d'appui plane 43 fixée au niveau de chacune des surfaces externes d'appui 46.

Le serrage des tubes 4 est effectué entre la surface extérieure du profilé 41 et la plaque d'appui 43. Le verrouillage et le déverrouillage du dispositif sont obtenus comme précédemment, en déplaçant la bande plate 44 entre deux positions, suivant la direction longitudinale de la barre 47. Dans l'une de ces positions, ou position de verrouillage, représentée sur la figure 10, les surfaces d'appui 45 de la bande 42 sont en contact avec des parties intermédiaires 49 de la bande plate 44 disposées entre les ouvertures 50. Dans la position de déverrouillage de la barre antivibratoire 47, les surfaces d'appui 45 sont placées au niveau des ouvertures 50.

L'invention ne se limite pas aux modes de réalisation qui ont été décrits.

C'est ainsi qu'on peut imaginer des bandes pliées en créneaux ayant des formes différentes de celles qui ont été décrites. On peut imaginer l'utilisation d'une ou de deux bandes pliées en créneaux venant en appui directement sur les tubes ou par l'intermédiaire de plaques ou bandes d'appui planes.

Enfin, le dispositif suivant l'invention peut être utilisé dans des applications différentes des barres antivibratoires d'un générateur de vapeur et, de manière générale, pour le calage de tous composants d'une installation disposés de façon à constituer des rangées successives séparées par un espace de largeur sensiblement constante.

## Revendications

1. Dispositif de calage antivibratoire de composants (4) d'une installation disposés de façon à constituer des rangées successives séparées par un espace de largeur sensiblement constante, destiné à être intercalé entre deux rangées successives et constitué par un profilé (11, 31, 41) ayant une section creuse dans lequel sont disposés au moins deux éléments de calage (12, 13, 14), l'un au moins des éléments étant monté fixe par rapport au profilé et un autre étant monté mobile par rapport au profilé, dans la direction longitudinale du profilé et comportant des surfaces d'actionnement complémentaires et un moyen de déplacement longitudinal relatif, de manière à être être déplacés l'un par rapport à l'autre, à la fois dans la direction longitudinale et dans la direction transversale correspondant à la direction de la largeur des rangées, l'un au moins des éléments de calage (12, 13) venant en appui sur des composants (4) disposés suivant une rangée, caractérisé par le fait que l'un au moins des éléments de calage (12, 13) est constitué par une bande métallique élastique pliée de façon à constituer des créneaux transversaux disposés successivement dans la direction longitudinale, ayant des faces d'appui (16, 17 ; 36, 37 ; 45, 46) opposées dirigées, les unes vers l'intérieur du support profilé (11, 31, 41), les autres vers l'extérieur et une bande plate (14, 34, 44) comportant des ouvertures (20, 40, 50) séparées par des parties intermédiaires (21, 39, 49) de la bande plate dont les dimensions et la disposition suivant la longueur de la bande (14, 34, 44) correspondent aux dimensions et à la disposition des surfaces d'appui intérieures (17, 37, 45) de la bande pliée (12, 13 ; 32, 42), le moyen de déplacement longitudinal étant associé à la bande plate (14, 34, 44) pour son déplacement entre une position de déverrouillage où les surfaces d'appui intérieures (17, 37, 45) sont en coïncidence avec les ouvertures (20, 40, 50) de la bande plate et une position de verrouillage où les surfaces d'appui intérieures sont en contact avec les parties intermédiaires (21, 39, 49) de la bande plate, entre les ouvertures (20, 40, 50).

2. Dispositif de calage suivant la revendication 1, caractérisé par le fait qu'il comporte deux éléments de calage (12, 13) constitués chacun par une bande métallique élastique pliée de façon à constituer des créneaux ayant des surfaces d'appui (16) dirigées vers l'extérieur du support profilé (11) passant au travers d'ouvertures (15) ménagées dans le support (11) et une bande plate (14) intercalée entre des surfaces d'appui intérieures (17) des bandes pliées en créneaux (12, 13).

3. Dispositif de calage suivant la revendication 2, caractérisé par le fait que les surfaces d'appui intérieures des bandes pliées en créneaux ont une forme sensiblement cylindrique.

4. Dispositif de calage suivant la revendication 1, caractérisé par le fait qu'il comporte une bande pliée en créneaux (32) dont les surfaces d'appui extérieures (36) sont en appui sur la surface intérieure du profilé (31) et des surfaces d'appui intérieures (37) en appui sur la bande plate (34), elle-même en contact avec une plaque d'appui (33) dont une partie est saillante par rapport à la surface extérieure du support profilé (31).

5. Dispositif de calage suivant la revendication 1, caractérisé par le fait qu'il comporte une bande métallique (42) pliée en créneaux ayant une partie située à l'extérieur du support profilé (41) comportant des surfaces d'appui externes (46) et une partie à l'intérieur du support profilé (41) comportant des surfaces d'appui intérieures (45) en contact avec la bande plate (44).

6. Dispositif de calage suivant l'une quelconque des revendications 1 à 5, caractérisé par le fait que les bords des ouvertures (20, 40, 50) délimitant les parties intermédiaires (21, 39, 49) de la bande plate (14, 34, 44) sont arrondis ou inclinés de façon à faciliter le déplacement de la bande plate (14, 34, 44), dans le sens du verrouillage.

7. Dispositif de calage suivant l'une quelconque des revendications 1 à 6, caractérisé par le fait que la bande plate (14, 34, 44) comporte une partie d'extrémité (22) dans laquelle est prévue une ouverture (23) et que le support profilé (11) comporte une partie d'extrémité correspondante destinée à recevoir la partie d'extrémité (22) de la bande plate (14, 34, 44) comportant deux ouvertures (26, 27) placées de façon à venir en coïncidence avec l'ouverture (23), dans la position de verrouillage et dans la position de déverrouillage respectivement, le dispositif de calage comportant de plus un pion de blocage (30) susceptible d'être introduit dans les ouvertures (23, 26) et (23, 27) respectivement.

8. Dispositif de calage suivant le revendication 7, caractérisé par le fait que la partie d'extrémité (22) de la bande plate (14, 34, 44) est constituée sous la forme d'une chape à deux branches et comporte de plus un axe de traction (24) accessible entre les deux branches de la chape (22).

9. Utilisation d'un dispositif de calage suivant l'une quelconque des revendications 1 à 8, pour constituer au moins l'une des branches (7a, 7b) d'une barre antivibratoire disposée dans la partie supérieure ou chignon d'un faisceau de tubes (4) d'un générateur de vapeur à eau sous pression.

10. Utilisation suivant la revendication 9, caractérisée par le fait que les dispositifs de calage (7a, 7b) sont associés par paire pour constituer une barre antivibratoire et articulés à l'une de leurs extrémités sous une forme analogue à celle d'un compas.

**Patentansprüche**

1. Vorrichtung zum schwingungsdämpfenden bzw. schwingungsfestsetzenden Verkeilen bzw. Blockieren von Bestandteilen (4) einer Anordnung, die derart angeordnet sind, daß sie aufeinanderfolgende Reihen bilden, die durch einen Raum von im wesentlichen konstanter Breite getrennt sind, die dazu bestimmt ist, zwischen zwei aufeinanderfolgende Reihen eingeklemmt zu werden, und gebildet wird aus einem Profil (11, 31, 41), das einen hohlen Abschnitt aufweist, in dem wenigstens zwei Blockierelemente (12, 13, 14) angeordnet sind, wobei wenigstens eines der Elemente bezüglich des Profils fest montiert ist und ein anderes bezüglich des profils in der Längsrichtung des Profils beweglich montiert ist, und mit komplementären Wirkoberflächen und einer Einrichtung zum relativen Längsbewegen derart, daß sie zueinander gleichzeitig in eine Längsrichtung und in eine Querrichtung entsprechend der Breitenrichtung der Reihen bewegt werden, wobei wenigstens eines der Blockierelemente (12, 13) in Anlage kommt auf die Bestandteile (4), die gemäß einer Reihe angeordnet sind, **dadurch gekennzeichnet**, daß wenigstens eines der Blockierelemente (12, 13, 14) aus einem elastischen Metallband gebildet ist, das derart gefaltet ist, daß es in Längsrichtung aufeinanderfolgend Quervorsprünge oder Ausbuchtungen bildet, die in Gegenrichtung ausgerichtete Auflageflächen (16, 17; 36, 37; 45, 46) aufweisen, wobei die einen nach dem Inneren der profilierten Stütze (11, 31, 41), die anderen nach außen gerichtet sind, und aus einem ebenen Band (14, 34, 44) gebildet ist, das Öffnungen (20, 40, 50) aufweist, die durch Zwischenbereiche (21, 39, 49) des ebenen Bandes getrennt sind, dessen Abmessungen und Anordnung entlang der Länge des Bandes (14, 34, 44) den Abmessungen und der Anordnung der inneren Auflageflächen (17, 37, 45) des gefalteten Bandes (12, 13; 32, 42) entsprechen, wobei die Längsbewegungseinrichtung dem ebenen Band (14, 13, 44) für dessen Bewegung zwischen einer Entriegelungsstellung, wo die inneren Auflageflächen (17, 37, 45) in Übereinstimmung mit den Öffnungen (20, 40, 50) des ebenen Bandes sind, und einer Verriegelungsstellung zugeordnet ist, wo die inneren Auflageflächen in Berührung mit den Zwischenbereichen (21, 39, 49) des ebenen Bandes zwischen den Öffnungen (20, 40, 50) sind.

2. Blockiervorrichtung nach Anspruch 1, **dadurch gekennzeichnet**, daß sie zwei Blockierelemente (12, 13) aufweist, die jeweils durch ein elastisches Metallband gebildet werden, das derart gefaltet ist, daß es Vorsprünge bildet, die Auflageflächen (16) aufweisen, die nach dem Äußeren der profilierten Stütze (11) gerichtet sind, wobei sie Öffnungen (15) durchqueren, die in der Stütze (11) und einem ebenen Band (14) ausgebildet sind, das zwischen die inneren Auflageflächen (16) der mit Vorsprüngen gefalteten Bänder (12, 13) geklemmt ist.

3. Blokiervorrichtung nach Anspruch 2, **dadurch gekennzeichnet**, daß die inneren Auflageflächen der mit Vorsprüngen gefalteten Bänder im wesentlichen Zylinderform aufweisen.

4. Blockiervorrichtung nach Anspruch 1, **dadurch gekennzeichnet**, daß sie ein mit Vorsprüngen bzw. Ausbuchtungen gefaltetes Band (32) aufweist, dessen äußere Auflageflächen (36) in Anlage sind an eine innere Oberfläche des Profils (31) und mit inneren Auflageflächen (37) in Anlage an ein ebenes Band (34), das selbst in Kontakt ist mit einer Auflageplatte (33), von der ein Bereich bezüglich der Außnoberfläche der profilierten Stütze (31) vorspringt.

5. Blockiervorrichtung nach Anspruch 1, **dadurch**

**gekennzeichnet**, daß sie ein metallisches Band (42) aufweist, das mit Vorsprüngen bzw. Ausbuchtungen gefaltet ist, das einen Bereich aufweist, der außen an der profilierten Stütze (41) angeordnet ist, die eine äußere Auflagefläche (46) und einen Bereich im Inneren der profilierten Stütze (41) aufweist, der innere Auflageflächen (45) in Berührung mit dem ebenen Band (44) aufweist.

6. Blockiervorrichtung nach einem der Ansprüche 1 bis 5, **dadurch gekennzeichnet**, daß die Ränder der Öffnungen (20, 40, 50), die die Zwischenbereiche (21, 39, 49) des ebenen Bandes (14, 34, 44) begrenzen, abgerundet oder geneigt sind, derart, daß sie die Bewegung des ebenen Bandes (14, 34, 44) in Verriegelungsrichtung erleichtern.

7. Blockiervörrichtung nach einem der Ansprüche 1 bis 6, **dadurch gekennzeichnet**, daß das innere Band (14, 34, 44) einen Endbereich (22) aufweist, in dem eine Öffnung (23) vorgesehen ist, und daß die profilierte Stütze (11) einen entsprechenden Endbereich aufweist, der dazu dient, den Endbereich (22) des ebenen Bandes (14, 34, 44) aufzunehmen, der zwei Öffnungen (26, 27) aufweist, die derart angeordnet sind, daß sie in Übereinstimmung mit der Öffnung (23) in die Verriegelungsstellung bzw. die Entriegelungsstellung kommen, wobei die Blockiervorrichtung darüber hinaus ein Blockierungsmetallstück (30) aufweist, das geeignet ist, in die Öffnung (23, 26) bzw. (23, 27) eingeführt zu werden.

8. Blockiervorrichtung nach Anspruch 7, **dadurch gekennzeichnet**, daß der Endbereich (22) des ebenen Bandes (14, 34, 44) in der Form einer Abdeckkappe mit zwei Armen gebildet ist, und weiterhin eine Zugachse (24) aufweist, die zwischen den beiden Armen der Abdeckkappe (22) zugänglich ist.

9. Verwendung einer Blockiervorrichtung nach einem der Anspüche 1 bis 8, zur Bildung wenigstens eines der Arme (7a, 7b) eines schwingungsdämpfenden bzw. schwingungsfestsetzenden Balkens, der in einem oberen Bereich oder Knotebereich eines Rohrbündels (4) eines Druckwasserdampfgenerators angeordnet ist.

10. Verwendung nach Anspruch 9, **dadurch gekennzeichnet,** daß die Blockiervorrichtungen (7a, 7b) paarweise zugeordnet sind, um einen schwingungsdämpfenden bzw. schwingungsfestsetzenden Balken zu bilden und an einem ihrer Enden in der analogen Form zu jener eines Zirkels angelenkt sind.

**Claims**

1. Apparatus for the antivibrational wedging of components (4) of an installation which are disposed in such a manner as to form successive rows separated by a space of substantially constant width, which apparatus is intended to be inserted between two successive rows and is composed of a sectional member (11, 31, 41) having a hollow section, in which are disposed at least two wedging members (12, 13, 14), at least one of the elements being fixedly mounted relative to the sectional member and another being movably mounted relative to the sectional member, in the longitudinal direction of the sectional member and having complementary operating surfaces and means for relative longitudinal displacement, in such a manner as to be displaced relative to one another both in the longitudinal direction and in the transverse direction corresponding to the direction of the width of the rows, at least one of the wedging members (12, 13) coming to bear against components (4) arranged in a row, characterized in that at least one of the wedging members (12, 13) is in the form of a resilient metal strip folded in such a manner as to form transverse crenellations disposed in succession in the longitudinal direction, and having opposite support faces (16, 17; 36, 37; 45, 46) some of which are directed towarde the interior of the sectional support (11, 31, 41) whilst the others are directed towards the outside, and a flat strip (14, 34, 44) provided with openings (20, 40, 50) separated by intermediate portions (21, 39, 49) of the flat strip and whose dimensions and arrangement along the length of the strip (14, 34, 44) correspond to the dimensions and arrangement of the inner support surfaces (17, 37, 45) of the folded strip (12, 13; 32, 42); the longitudinal displacement means being associated with the flat strip (14, 34, 44) for displacing the latter between an unlocked position, in which the inner support surfaces (17, 37, 45) register with the openings (20, 40, 50) in the flat strip, and a locked position in which the inner support surfaces are in contact with the intermediate portions (21, 39, 49) of the flat strip between the openings (20, 40, 50),

2. Wedging apparatus according to claim 1, characterized in that it comprises two wedging members (12, 13) each comprising a resilient metal strip folded in such a manner as to form crenellations having support surfaces (16) directed towards the outside of the sectional support member (11) and passing through openings (15) provided in the support (11), and a flat strip (14) interposed between inner support surfaces (17) of the strips (12, 13) folded into crenellations.

3. Wedging apparatus according to claim 2, characterized in that the inner support surfaces of the strips folded into crenellations have a substantially cylindrical shape.

4. Wedging apparatus according to claim 1, characterized in that it comprises a strip (32) folded into crenellations, the outer support surfaces (36) of which bear against the inner surface of the sectional member (31), and the inner support surfaces (37) of which bear against the flat strip (34), which in turn is in contact with a support plate (33) of which a part projects in relation to the outer surface of the sectional support (31).

5. Wedging apparatus according to claim 1, characterised in that it has a metal strip (42) folded into crenellations which strip has a part situated outside the sectional support (41) comprising outer support surfaces (46), and a part inside the sectional support (41) comprising inner support surfaces (45) in contact with the flat strip (44).

6. Wedging apparatus according to any of claims 1 to 5 characterised in that the edges of the openings (20, 40, 50) delimiting the intermediate portions (21, 39, 49) of the flat strip (14, 34, 44) are rounded or inclined in such a manner as to facilitate the displacement of the flat strip (14, 34, 44) in the locking direction.

7. Wedging apparatus according to any one of claims 1 to 6, characterised in that the flat strip (14, 34, 44) has an end portion (22) in which an opening (23) is provided and that the sectional support (11) has a corresponding end portion intended to receive the end portion (22) of the flat strip (14, 34, 44) and having two openings (26, 27) situated in such a manner as to register with the opening (23) in the locked position and in the unlocked position respectively, the wedging apparatus further being provided with a securing stud (30) adapted to be introduced into the openings (23, 26) and (23, 27) respectively.

8. Wedging apparatus according to claim 7, characterised in that the end portion (22) of the flat strip (14, 34, 44) is in the form of a yoke having two branches and is in addition provided with a pulling pin (24) accessible between the two branches of the yoke (22).

9. Utilization of a wedging apparatus according to any one of claims 1 to 8, to constitute at least one of the arms (7a, 7b) of an antivibration bar disposed in the top part or "chignon" of a bank of tubes (4) in a pressurized water steam generator.

10. "Utilization according to claim 9, characterized in that the wedging apparatus (7a, 7b) are associated in pairs to form an antivibration bar and are articulated at one end in the manner of compass legs.

FIG.1

FIG.2

FIG.3

FIG.4

FIG.5

FIG. 6

FIG.7

FIG.8

FIG.9

FIG.10

FIG.11